Europäisches Patentamt

European Patent Office

Office européen des brevets

(11) Numéro de publication: **0 418 161 A1**

# (12) DEMANDE DE BREVET EUROPEEN

(21) Numéro de dépôt: 90402527.7

(22) Date de dépôt: **13.09.90**

(51) Int. Cl.⁵: **F16N 29/00**

(30) Priorité: **14.09.89 FR 8912056**

(43) Date de publication de la demande:
**20.03.91 Bulletin 91/12**

(84) Etats contractants désignés:
**BE CH DE ES GB IT LI NL SE**

(71) Demandeur: **FRAMATOME**
**Tour Fiat 1, Place de la Coupole**
**F-92400 Courbevoie(FR)**

(72) Inventeur: **Meyer, Jacques**
**3 rue René Brulay**
**F-78500 Sartrouville(FR)**

(74) Mandataire: **Jacobson, Claude et al**
**Cabinet Lavoix 2, Place d'Estienne d'Orves**
**F-75441 Paris Cedex 09(FR)**

(54) Procédé et appareil de prévention du grippage d'un palier d'arbre.

(57) On introduit dans le fluide lubrifiant un corps subissant une modification à une température nettement supérieure à la température normale du fluide dans le palier, et on surveille dans le fluide lubrifiant une propriété chimique et/ou physique caractéristique de cette modification.

Application aux machines tournantes.

EP 0 418 161 A1

La présente invention est relative à la lubrification des paliers d'arbre, et notamment à la prévention de leur grippage.

L'ensemble des paliers des machines tournantes, indispensables au fonctionnement normal ainsi qu'aux fonctions de sûreté et de sauvegarde d'un processus industriel tel qu'une raffinerie, une centrale thermique ou nucléaire, est, d'une manière générale, surveillé par la mesure systématique des températures desdits paliers.

Cette technique présente plusieurs inconvénients :
- d'une part, elle s'applique mal aux machines fonctionnant à température relativement élevée (ventilateurs d'extraction de gaz chauds, pompes véhiculant des fluides à haute température, etc.). En effet, il est difficile d'établir une corrélation certaine entre une variation de température du palier et une amorce de grippage ;
- d'autre part, en cas d'amorce de grippage, l'élévation de la température du palier ne s'effectue que lentement et, dans bien des cas, d'importants dégats ont pu être infligés à la machine avant que le seuil d'alarme soit atteint.

L'invention a pour but de fournir une technique permettant de détecter de façon fiable et précoce une amorce de grippage, afin de réduire les temps d'intervention et d'arrêt des machines tournantes.

A cet effet, l'invention a pour objet un procédé de prévention du grippage d'un palier d'arbre lubrifié au moyen d'un fluide lubrifiant , caractérisé en ce qu'on introduit dans le fluide lubrifiant un corps subissant une modification à une température nettement supérieure à la température normale du fluide dans le palier, et on surveille dans le fluide lubrifiant une propriété chimique et/ou physique caractéristique de cette modification.

Ladite propriété peut notamment être le pH ou le spectre infrarouge d'absorption ou d'émission induite.

L'invention a également pour objet un appareil de lubrification d'un palier d'arbre destiné à la mise en oeuvre d'un tel procédé. Cet appareil, du type comprenant des moyens de prévention du grippage du palier, est caractérisé en ce que lesdits moyens de prévention comprennent des moyens de détection d'une propriété chimique et/ou physique associée à un corps introduit dans le fluide lubrifiant.

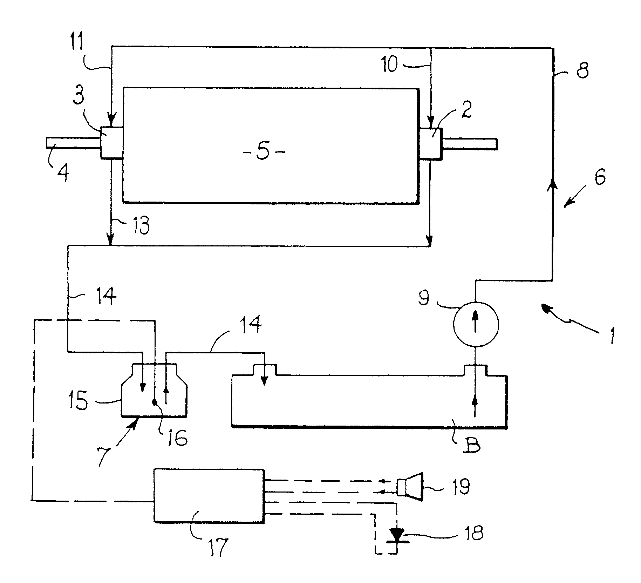

Des exemples de mise en oeuvre de l'invention vont maintenant être décrits en regard du dessin annexé, sur lequel la figure unique représente schématiquement un appareil de lubrification conforme à l'invention.

L'appareil 1 représenté au dessin est destiné à la lubrification des deux paliers 2 et 3 de l'arbre 4 d'une machine tournante 5, laquelle peut être par exemple une pompe, un alternateur, une turbine, etc. . . Il comprend un circuit 6 de circulation d'une huile lubrifiante, et un dispositif de surveillance 7.

Le circuit 6 comprend une bâche B d'où part une conduite 8 d'amenée d'huile aux paliers 2 et 3, équipée d'une pompe de circulation 9 et qui se divise, en aval de cette pompe, en deux branches 10, 11 conduisant aux deux paliers respectivement. De chaque palier part une conduite respective 12, 13, et ces deux conduites se rejoignent en une conduite de retour 14 qui débouche dans la bâche.

Le dispositif de surveillance 7 comprend un récipient 15 interposé dans la conduite 14, traversé par le fluide de retour et dans lequel se trouve une sonde 16 relié à un analyseur 17.

L'huile contient un corps qui subit une modification physique et/ou chimique, notamment une modification irréversible, à une température nettement supérieure à la température maximale de fonctionnement normal des paliers 2 et 3 mais inférieure à la température atteinte localement en cas d'amorce de grippage, température dont il sera question plus loin. Ce corps peut être un constituant habituel de l'huile, ou bien un additif introduit spécialement en petite quantité, en temps que traceur, en vue de la détermination d'une amorce de grippage.

Dans un premier exemple, ledit corps est un anti-oxydant, par exemple le di-thiosulfate de zinc, normalement présent dans de nombreux huiles, par exemple dans des huiles pour paliers de turbines. Les anti-oxydants se décomposent généralement à des températures variant, suivant leur formule, de 250 à 360 $^\circ$ C, et libèrent alors des radicaux ayant un spectre infrarouge caractéristique. Dans ce cas, la sonde 16 est une "optrode" (équivalent optique d'une électrode) et l'analyseur 17 est un spectromètre infrarouge. Le procédé de spectrométrie peut par exemple consister en une excitation de l'huile par un rayonnement UV et une mesure de la longueur d'onde de la lumière réémise (luminescence induite) , ce au moyen d'une fibre optique dont l'extrémité est immergée dans l'huile et qui est associée à un petit miroir.

Pendant le fonctionnement normal de la machine 5, la température de l'huile reste nettement au dessous de la température de décomposition de l'anti-oxydant considéré. Le spectre infrarouge déterminé par l'analyseur 17 ne révèle donc pas la présence d'un produit de décomposition de cet anti-oxydant.

Si une amorce de grippage apparaît, il se produit une élévation de température très importante de façon localisée, à l'emplacement de cette amorce de grippage. En effet, les aspérités métalliques qui entrent en contact à cet emplacement sont instantanément portées à une température qui peut atteindre ou même dépasser 800 $^\circ$ C.

Cette haute température provoque la décomposition locale de l'anti-oxydant considéré, et la présence du produit de décomposition est détectée par le dispositif 7 par spectrométrie infrarouge.

Dans un autre mode de mise en oeuvre de l'invention, on peut introduire dans l'huile lubrifiante un additif traceur dont la décomposition thermique se produit elle aussi entre la température maximale de fonctionnement normal des paliers et la surtempérature atteinte localement lors d'une amorce de grippage, et dont un produit de décomposition possède un pH différent de celui de l'huile. Cet additif peut par exemple être un corps normalement neutre dont la décomposition thermique libère des radicaux acides ou basiques.

On connaît des additifs remplissant cette condition ; il s'agit d'esters gras normalement neutres qui, ajoutés en grande quantité aux huiles pour moteurs Diesel marins ou ferroviaires, servent à l'accélération du rôdage de ces moteurs, les radicaux acides libérés par décomposition thermique attaquant les aspérités métalliques qui ont provoqué leur libération. Dans le cas présent, où les paliers à lubrifier sont supposés rodés, ces esters gras sont introduits dans l'huile en petite quantité pour servir seulement de traceur, la présence des radicaux acides étant déterminée par le dispositif 16, 17, lequel est alors un pH-mètre.

Bien entendu, cette variante ne convient que pour les cas où l'huile ne contient pas de corps susceptibles de détruire les radicaux libérés par décomposition thermique avant qu'ils aient pu être détectés par le pH-mètre.

Dans tous les cas, le temps de réponse du dispositif 7 est très rapide, de l'ordre de quelques dizaines de secondes à quelques secondes, ce qui permet d'arrêter la machine tournante, en cas d'amorce de grippage, bien avant que des dégradations importantes se soient produites. L'exploitant de la machine peut être averti par une alarme visuelle 18 ou sonore 19 déclenchée par l'analyseur 17.

En variante, on peut bien entendu interposer un dispositif de surveillance tel que le dispositif 7 sur chacune des conduites 12 et 13, de manière à surveiller indépendamment les deux paliers.

## Revendications

1. Procédé de prévention du grippage d'un palier d'arbre (2,3) lubrifié au moyen d'un fluide lubrifiant , caractérisé en ce qu' on introduit dans le fluide lubrifiant un corps subissant une modification à une température nettement supérieure à la température normale du fluide dans le palier, et on surveille dans le fluide lubrifiant une propriété chimique et/ou physique caractéristique de cette modification.

2. Procédé suivant la revendication 1 , pour palier associé à un circuit (6) de circulation du fluide lubrifiant, caractérisé en ce qu'on effectue ladite surveillance dans ledit circuit, à la sortie du palier (2,3).

3. Procédé suivant l'une des revendications 1 et 2, caractérisé en ce que ladite propriété est le pH, ledit corps étant notamment un corps neutre libérant par décomposition thermique des radicaux acides ou basiques, tel qu'un ester gras.

4. Procédé suivant l'une des revendications 1 et 2, caractérisé en ce que ladite propriété est le spectre infrarouge d'absorption ou d'émission induite.

5. Procédé suivant la revendication 4, caractérisé en ce que ledit corps est un anti-oxydant, notamment le di-thiosulfate de zinc.

6. Appareil de lubrification d'un palier d'arbre (2,3) au moyen d'un fluide lubrifiant, du type comprenant des moyens de prévention du grippage du palier, caractérisé en ce que lesdits moyens de prévention comprennent des moyens (16, 17) de détection d'une propriété chimique et/ou physique associée à un corps introduit dans le fluide lubrifiant.

7. Appareil suivant - la revendication 6, comprenant un circuit (6) de circulation du fluide lubrifiant, caractérisé en ce que lesdits moyens de détection sont interposés dans ledit circuit, en aval du palier (2,3).

8. Appareil suivant l'une des revendications 6 et 7, caractérisé en ce que lesdits moyens de détection (16, 17) comprennent un pH-mètre, ledit corps étant notamment un corps neutre qui libère des radicaux acides ou basiques par décomposition thermique, tel qu'un ester gras.

9. Appareil suivant la revendication 8, caractérisé en ce que lesdits moyens de détection (16, 17) comprennent une optrode (16) associée à un spectromètre infrarouge (17)

10. Appareil suivant la revendication 9, caractérisé en ce que ledit corps est un anti-oxydant, notamment le di-thiosulfate de zinc.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN vol. 9, no. 94 (M-374)(1817) 24 avril 1985, & JP-A-59 219598 (SHIN NIPPON SEITETSU K.K.) 10 décembre 1984, * le document en entier * | 1,4,6,9 | F 16 N 29/00 |
| Y | CH-B-4 290 00  (GARDILLE) * le document en entier * | 1,4,6,9 | |
| A | GB-A-9 649 51  (ROLLS-ROYCE) * page 2, ligne 31 - page 59; figure * | 2,7 | |
| A | PATENT ABSTRACTS OF JAPAN vol. 6, no. 253 (M-178)(1131) 11 décembre 1982, & JP-A-57 146996 (HINO JIDOSHA KOGYO) 10 septembre 1982, * le document en entier * | 3,8 | |
| A | FR-A-2 527 775  (STAUFFER CHEMICAL COMPANY) | | |
| A | US-A-4 229 974  (SMITH ET AL.) | | DOMAINES TECHNIQUES RECHERCHES (Int. Cl.5) |
| A | PATENT ABSTRACTS OF JAPAN vol. 5, no. 6 (M-50)(678) 16 janvier 1981, & JP-A-55 139914 (ISUZU JIDOSHA) 1 novembre 1980, * le document en entier * | | F 16 N F 01 M F 02 B G 01 K F 16 C |

Le présent rapport de recherche a été établi pour toutes les revendications

| Lieu de la recherche | Date d'achèvement de la recherche | Examinateur |
|---|---|---|
| La Haye | 09 novembre 90 | KOOIJMAN F.G.M. |